(19) Europäisches Patentamt
European Patent Office
Office européen des brevets

(11) **EP 1 920 892 B1**

## (12) EUROPÄISCHE PATENTSCHRIFT

(45) Veröffentlichungstag und Bekanntmachung des Hinweises auf die Patenterteilung:
**26.12.2012 Patentblatt 2012/52**

(51) Int Cl.:
***B25J 9/16*** *(2006.01)*

(21) Anmeldenummer: **07120292.3**

(22) Anmeldetag: **08.11.2007**

(54) **Robotersteuerung, Roboter und Verfahren zum Steuern eines Roboters**

Robot control, robot and method for actuating a robot

Commande de robot, robot et procédé de commande d'un robot

(84) Benannte Vertragsstaaten:
**DE FR IT**

(30) Priorität: **10.11.2006 DE 102006053158**

(43) Veröffentlichungstag der Anmeldung:
**14.05.2008 Patentblatt 2008/20**

(73) Patentinhaber: **KUKA Roboter GmbH**
**86165 Augsburg (DE)**

(72) Erfinder: **Weiss, Martin**
**86459 Margertshausen (DE)**

(74) Vertreter: **Patentanwälte**
**Funk & Böss GbR**
**Sigmundstraße 1**
**80538 München (DE)**

(56) Entgegenhaltungen:
**EP-A2- 1 612 004    WO-A1-00/60427**
**DE-A1- 10 233 226    US-A- 4 999 553**
**US-A- 5 497 061**

• **SUBUDHI B ET AL: "Dynamic modelling, simulation and control of a manipulator with flexible links and joints" ROBOTICS AND AUTONOMOUS SYSTEMS, ELSEVIER SCIENCE PUBLISHERS, AMSTERDAM, NL LNKD- DOI: 10.1016/S0921-8890(02)00295-6, Bd. 41, Nr. 4, 31. Dezember 2002 (2002-12-31), Seiten 257-270, XP004395051 ISSN: 0921-8890**

**Beschreibung**

Die Erfindung betrifft eine Robotersteuerung, einen Roboter und ein Verfahren zum Steuern eines Roboters.

Roboter sind Arbeitsmaschinen, die zur automatischen Handhabung von Objekten mit zweckdienlichen Einrichtungen, z.B. Greifern oder Werkzeugen, ausgerüstet sind und zumindest in einer, üblicherweise in mehreren Bewegungsachsen beispielsweise hinsichtlich Orientierung, Position und Arbeitsablauf programmierbar sind. Roboter weisen üblicherweise programmierbare Robotersteuerungen auf, die während des Betriebs der Roboter deren Bewegungsabläufe steuern. Robotersteuerungen sind u.A. in der EP 1 612 004 A2 offenbart.

Für eine zufriedenstellende Steuerung oder Regelung der Roboter weisen die Steuerungen physikalische Modelle des Roboters auf. Die allgemeinen räumlichen Bewegungen des Roboters werden mit einem kinematischen Modell des Roboters beschrieben, das im Wesentlichen die Geometrie des Roboters beschreibt. Für eine verbesserte dynamische Steuerung oder Regelung kann auch die Dynamik des Roboters berücksichtigt werden, die z.B. durch ein System der Bewegungsdifferentialgleichungen des Roboters in der Form der Newton-Eulerschen Gleichungen für holonome Systeme modelliert wird. Auch eine Elastizität der Gelenke/ Getriebe des Roboters können in die dynamische Modellierung des Roboters mit einfließen.

Roboter sind in der Regel mit einer Befestigungsvorrichtung und zur automatischen Handhabung von Objekten mit zweckdienlichen Einrichtungen, wie beispielsweise Greifern oder Werkzeugen, verbunden. Weist eine solche mit dem Roboter verbundene Komponente beispielsweise eine nicht vernachlässigbare Elastizität auf, dann kann die auf dem Modell des Roboters basierende Steuerung oder Regelung unter Umständen nicht mehr zufriedenstellend sein.

B. Subudhi et. al. offenbaren in "Dynamic modelling, simulation and control of a manipulator with flxible links and joints", Robotics and Autonomous Systems Vol. 41, Elsevier Science Publisher, Seiten 257-270, 2002, eine Robotersteuerung, welche ein dynamisches Modell für einen mit der Robotersteuerung zu steuernden Roboter umfasst. Eine am Roboter befestigte Nutzlast wir als eine Trägheit modelliert.

Die US 5,497,061 offenbart ein kinematisches Modell eines Roboters. Um den Einfluss einer am Endeffektor des Roboters befestigten Last zu berücksichtigen, wird das Robotermodell angepasst.

Die WO 00/60427 offenbart ein weiteres dynamisches Robotermodell, bei dem das Trägheitsmoment der Last berücksichtigt ist.

Die US 4,999,553 offenbart ein dynamisches Robotermodell, bei dem die Lage des Endeffektors des Roboters berücksichtigt wird.

Die Aufgabe der vorliegenden Erfindung ist es daher, eine verbesserte Robotersteuerung für einen Roboter und ein verbessertes Verfahren zum Steuern und/oder Regeln eines Roboters anzugeben.

Die Aufgabe der Erfindung wird gelöst durch Robotersteuerungsvorrichtung, aufweisend ein dynamisches Modell für einen mit der Robotersteuerungsvorrichtung zu steuernden Roboter, der mit wenigstens einer Komponente verbunden ist, wobei für das dynamische Modell sowohl dynamische Eigenschaften des Roboters als auch dynamische Eigenschaften der Komponente berücksichtigt sind und das dynamische Modell ein erstes Teilmodell und ein zweites Teilmodell aufweist, wobei das erste Teilmodell ein dynamisches Modell des Roboters und das zweite Teilmodell ein dynamisches Modell der Komponente ist, und das dynamisches Modell ein Feder-Dämpfer Modell aus einer Mehrzahl von modellierten Feder-Dämpfer Elementen ist, von denen wenigstens ein Feder-Dämpfer Element dem ersten Teilmodell und wenigstens ein weiteres der Feder-Dämpfer Elemente dem zweiten Teilmodell zugeordnet ist.

Dadurch, dass das dynamische Modell der erfindungsgemäße Steuerungsvorrichtung nicht nur das dynamische Verhalten des Roboters, insbesondere die Elastizität der Gelenke/Getriebe des Roboters, sondern auch das dynamische Verhalten der mit dem Roboter verbundenen Komponente, insbesondere deren Elastizität, berücksichtigt, ergeben sich Vorraussetzungen für eine verbesserte Steuerung oder Regelung des Roboters, die auf dem dynamischen Modell beruhen.

Die Aufgabe der Erfindung wird auch gelöst durch ein Verfahren zum Erhalten eines dynamischen Models für die Steuerung eines Roboters, aufweisend folgende Verfahrensschritte:

- Eingeben von das dynamische Verhalten eines Roboters beschreibenden Roboterparametern in eine Robotersteuerungsvorrichtung,

- Eingeben von das dynamische Verhalten einer mit dem Roboter verbundenen Komponente beschreibenden Komponentenparametern in die Robotersteuerungsvorrichtung und

- Erstellen eines dynamischen Modells, das das dynamische Verhalten des Roboters mit der mit dem Roboter befestigten Komponente modelliert, durch Erstellen eines das dynamische Verhalten des Roboters beschreibenden ersten Teilmodells aufgrund der eingegebenen Roboterparameter und Erstellen eines das dynamische Verhalten der Komponente beschreibenden zweiten Teilmodells aufgrund der eingegebenen Komponentenparameter, wobei das dynamische Modell ein Feder-Dämpfer Modell aus einer Mehrzahl von modellierten Feder-Dämpfer Elementen ist, von denen wenigstens ein Feder-Dämpfer Element dem ersten Teilmodell und wenigstens ein weiteres der Feder-Dämpfer Elemente dem zweiten Teilmodell zugeordnet ist.

Alternativ kann auch das dynamische Verhalten des Roboters und der Komponente zusammen beschreibenden Roboterparametern in die Robotersteuerungsvorrichtung eingegeben werden.

Das Eingeben der Parameter kann z.B. mittels einer mit der Robotersteuerungsvorrichtung verbundenen Eingabevorrichtung durchgeführt werden. Ein Eingeben von Parametern ist aber auch durch ein Einlesen von entsprechenden Dateien in die Robotersteuerungsvorrichtung durchführbar.

Weist die Robotersteuerungsvorrichtung bereits ein das dynamische Verhalten des Roboters beschreibendes Robotermodell auf, dann werden lediglich die Komponentenparameter in die Robotersteuerungsvorrichtung eingegeben, um das dynamische Modell zu erstellen.

Eine mit dem Roboter verbundene Komponente ist insbesondere eine Befestigungsvorrichtung für den Roboter. Dynamische Modelle von gewöhnlichen Robotersteuerungsvorrichtungen modellieren lediglich den Roboter als solchen. Die Befestigungsvorrichtung wird nicht weiter berücksichtigt, da diese bei einer gewöhnlichen Vorgehensweise als steif und als steif mit dem Roboter verbunden angenommen wird. Aufgrund der Berücksichtigung des dynamischen Verhaltens der Befestigungsvorrichtung und insbesondere deren Elastizität für das dynamische Modell der erfindungsgemäßen Robotersteuerungsvorrichtung ergeben sich Vorraussetzungen für eine verbesserte Performance der Steuerung oder Regelung eines mit der erfindungsgemäßen Robotersteuerungsvorrichtung versehenen Roboters. Befestigungsvorrichtungen sind z.B. ein Podest oder eine am Boden oder an einer Decke befestigte bewegliche Lineareinheit.

Eine mit dem Roboter verbundene Komponente kann auch eine zur Handhabung von Objekten zweckdienliche Einrichtung, wie beispielsweise Greifer oder Werkzeuge sein. Auch das dynamische Verhalten eines mit dem Greifer gegriffenen Werkstücks und insbesondere die Elastizität des Greifers und/oder des Werkzeugs kann für das dynamische Modell berücksichtigt werden.

Erfindungsgemäß weist dynamische Modell ein erstes Teilmodell und ein zweites Teilmodell auf, wobei das erste Teilmodell ein dynamisches Modell des Roboters und das zweite Teilmodell ein dynamisches Modell der Komponente ist. Das zweite Teilmodell modelliert insbesondere das elastische Verhalten der Komponente. Dies bietet sich besonders dann an, wenn die erfindungsgemäße Robotersteuerungsvorrichtung Grundmodule zum Erstellen des dynamischen Modells umfasst und das dynamische Modell aus einer variablen Anzahl dieser Grundmodule zusammengesetzt werden kann. Dies ist z.B. dann möglich, wenn der Roboter eine serielle Kinematik in offener Kette aufweist oder das dynamische Modell auf der Newton-Euler Gleichungen basiert.

Das dynamische Modell der erfindungsgemäßen Robotersteuerungsvorrichtung ist ein Feder-Dämpfer Modell aus einer Mehrzahl von Feder-Dämpfer-Elemente, von denen wenigstens ein Feder-Dämpfer Element dem ersten Teilmodell und wenigstes ein weiteres der Feder-Dämpfer Elemente dem zweiten Teilmodell zugeordnet ist. Das dynamische Modell kann dann aus den beiden Teilmodellen zusammengesetzt werden. Ein Feder-Dämpfer Robotermodell gehört zur Modellklasse der sogenannten "rigid link, flexible joint (RLFJ)" Robotermodell und kann beispielsweise unter der Annahme, dass die Elastizitäten in den Getrieben und/oder Gelenken des Roboters konzentriert angeordnet und die Glieder des Roboters zwischen den Gelenken starr sind, erstellt werden. Die einzelnen Getriebe/ Gelenke werden als einzelne Feder-Dämpfer Elemente mit einer Torsionsfeder um die Drehachse modelliert; die zur Drehachse orthogonalen Achsen werden als ideal steif angekommen. Somit entsteht für das Feder-Dämpfer Robotermodell (erstes Teilmodell) eine Folge von Feder-Dämpfer Elementen mit Steifigkeiten $c_i$ und Dämpfungen $d_i$, die das dynamische Verhalten des Roboters beschreibende Roboterparameter sind. Eine andere Variante stellen "flexible link, flexible joint"-Robotermodelle dar, die Feder-Dämpfer-Elemente auch für die Strukturbauteile annehmen. Die Steifigkeiten und Dämpfungen können aber auch aus anderen eingegeben Roboterparametern, z.B. Schwingungsfrequenzen, Massen oder Trägheiten des Roboters berechnet werden. Die Verbindungen zwischen den Gelenken können dann kinematisch durch deren geometrische Ausdehnung modelliert werden, d.h. durch die Massen $m_i$ der Verbindungen ohne dynamische/ elastische Eigenschaften. Die dynamischen Eigenschaften der Komponente ergeben für diese Variante das zweite Teilmodell. Die Komponente kann ebenfalls als wenigstens ein Feder-Dämpfer Element (Torsionsfeder mit Dämpfer) modelliert werden. Handelt es sich beispielsweise bei der Komponente um die Befestigungsvorrichtung, z.B. ein Podest, dann kann das Podest als ein einziges Feder-Dämpfer Element mit der Steifigkeit $c_p$ und der Dämpfung $d_p$ modelliert werden. Die Steifigkeit $c_p$ und die Dämpfung $d_p$ sind die das dynamische Verhalten der Komponente (Podest) beschreibenden Komponentenparameter und können aus der Konstruktionsgröße und den Materialparametern der Befestigungsvorrichtung errechnet werden. Das dynamische Modell ergibt sich dann aus einer Hintereinanderschaltung der beiden Teilmodelle.

Ist die Komponente z.B. ein Greifer mit einem gegriffenen Werkstück, dann können der Greifer und das Werkstück als zwei hintereinadergeschaltete Feder-Dämpfer Elemente modelliert werden, wobei eines der Feder-Dämpfer Elemente den Greifer und das andere Feder-Dämpfer Element das gegriffene Werkstück dynamisch modelliert. Ein solches Modell ist besonders bei relativ großen Werkstücken, die insbesondere auch eine relativ große Elastizität aufweisen, sinnvoll.

Beispielsweise werden die dem Feder-Dämpfer Komponentenmodell zugeordneten und die Komponente beschreibenden Parameter zusätzlich in den Maschinendaten der erfindungsgemäßen Robotersteuerungsvorrichtung eingetragen.

Die Roboterparameter können die Steifigkeit und Dämpfung von Gelenken und/oder Getrieben des Roboters und die Komponentenparameter die Dämpfung und Steifigkeit der Komponente sein.

Die Roboterparameter können aber auch Schwingungsfrequenzen und Trägheiten von Gelenken und/oder Getrieben des Roboters und die Komponentenparameter die Schwingungsfrequenz und Trägheit der Komponente sein. Ein Vorteil dieser Parameter ist deren relativ einfache messtechnische Ermittlung. Aus den Schwingungsfrequenzen und den Massen $m$ (bei linearen Bewegungen) bzw. Massenträgheiten $J$ (bei rotatorischen Bewegungen) kann die Schwingungsfrequenz $\omega$ über die Annahme, dass der Roboter bzw. der Roboter mit der Komponente ein harmonischer Oszillator ist, ermittelt werden. Die Massen bzw. Massenträgheiten sind in der Regel bekannt und es ergibt sich folgende Gleichung

$$m\ddot{q} + cq = 0 \quad \text{bzw.} \quad J\ddot{q} + cq = 0,$$

wobei $q$ der Achswinkel ist.

Die Steifigkeit c ergibt sich dann gemäß

$$\omega^2 = \frac{c}{m} \quad \text{bzw.} \quad \omega^2 = \frac{c}{J}$$

wobei hier $\omega$ als Kreisfrequenz interpretiert wird, die mittels $f = \omega/(2\pi)$ in die Frequenz $f$ in der Einheit Hertz umgerechnet werden kann.

Die Roboterparameter und die Komponentenparameter können auch mittels finiter Elemente Methoden-Berechnung ermittelt wurden.

Werte für die Dämpfung $d$, z.B. für Metalle wie Stahl, können Tabellen entnommen werden. Dies führt demnach auf ein Modell eines gedämpften harmonischen Oszillators, der durch folgende Gleichungen beschrieben werden kann:

$$m\ddot{q} + d\dot{q} + cq = 0 \quad \text{bzw.} \quad J\ddot{q} + d\dot{q} + cq = 0$$

Alternativ können die Eigenfrequenzen auch aus Finite-Elemente Modelle berechnet werden.

Andere gebräuchliche Modelle zur Beschreibung des dynamischen Verhaltens des Roboters sind z.B. 2-Massen-Schwinger zwischen zwei Antriebsseiten innerhalb des Roboters, d.h. zwischen dem Motorwinkel $q_m$ eines elektrischen Motors des Roboters und dem Achswinkel $q_a$ der entsprechenden Roboterverbindung sowie der Antriebsträgheit (Lastträgheit) $J_a$.

Ist in der Robotersteuerung bereits ein Robotermodell hinterlegt, das den Roboter bzw. dessen erste oder letzte Achse insbesondere als ein einziges Feder-Dämpfer Element modelliert, dann ist es auch möglich, die Steifigkeit und Dämpfung des Gesamtsystems aus Roboter mit am Roboter befestigter Komponente z.B. messtechnisch zu ermitteln und in die Robotersteuerungsvorrichtung einzugeben. Dann werden nach einer Ausführungsform des erfindungsgemäßen Verfahrens die das dynamische Verhalten des Gesamtsystems beschreibenden Parameter für das bereits in der Robotersteuerungsvorrichtung hinterlegte Robotermodell verwendet.

Die dynamischen Parameter des Gesamtsystems können z.B. folgendermaßen ermittelt werden:

Das den Roboter und die am Roboter befestigte Komponente werden z.B. durch einen Stoß in Schwingung versetzt und das Ausschwingen wird messtechnisch beobachtet. Der Ausschwingvorgang des Winkels $q(t)$ der Achse des Roboters kann insbesondere als gedämpfte harmonische Schwingung modelliert werden:

$$q(t) = A \cdot e^{-d \cdot t} \cdot \sin(\omega \cdot t + \varphi)$$

wobei $\omega$ die Schwingungsfrequenz, $d$ die Dämpfung und $\varphi$ ein Phasenwinkel ist.

Wird ein Signal $u(t)$ ermittelt, das dem Winkel dieser Achse während des Ausschwingens insbesondere als Funktion der Zeit t = 0...T zu diskreten Zeitpunkten entspricht, dann kann durch Minimierung des Fehlers

$$\min_{A,\ d,\ \omega+\varphi}\ \sum_{t=0}^{T}(u(t)-q(t))^2$$

die Schwingungsfrequenz $\omega$ bzw. über den Zusammenhang

$$\omega^2 = \frac{c_{ges}}{m}$$

die resultierende Steifigkeit $c_{ges}$ des Gesamtsystems aus Roboter mit am Roboter befestigter Komponente ermittelt werden.

Ausführungsbeispiele der Erfindung sind exemplarisch in den beigefügten schematischen Zeichnungen dargestellt. Es zeigen:

Fig. 1          einen 6-Achs Roboter,

Fig. 2          ein dynamisches Modell des Roboters,

Fig. 3          den auf einem Podest befestigten Roboter,

Fig. 4          das Podest,

Fig. 5          ein dynamisches Modell des Roboters mit Podest,

Figs. 6, 7      weitere dynamische Modelle des Roboters mit Podest,

Figs. 8, 9      den mit einer Lineareinheit verbundenen Roboter,

Fig. 10         ein dynamisches Modell des Roboters mit Lineareinheit,

Fig. 11         den Roboter mit einem Greifer und gegriffenem Werkstück,

Fig. 12         ein dynamisches Modell des Roboters mit Greifer und gegriffenem Werkstück und

Fig. 13         einen weiteren Roboter auf einem Podest.

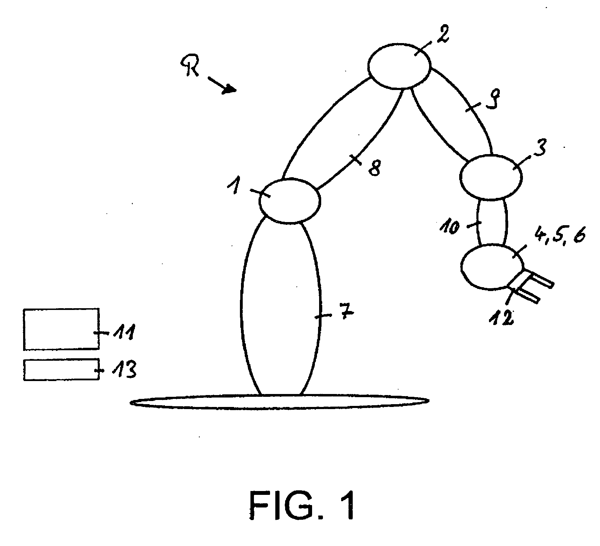

Die Fig. 1 zeigt einen allgemein bekannten 6-Achs-Knickarm-Industrieroboter R mit mehreren Achsen 1-6, die durch Hebel 7-10 miteinander verbunden sind. Die Achsen 1-6 sind beispielsweise durch Gelenke und Getriebe realisiert, die von nicht dargestellten, jedoch allgemein bekannten Antrieben bewegt werden. Im Falle des vorliegenden Ausführungsbeispiels sind die Antriebe elektrische Antriebe, die mit in den Figuren nicht dargestellten elektrischen Leitungen mit einer Steuerungsvorrichtungen 11 des Industrieroboters R verbunden sind. Auf der Steuerungsvorrichtung 11, die z.B. ein Rechner ist, läuft ein Rechnerprogramm, das die elektrischen Antriebe in allgemein bekannte Weise derart ansteuert, sodass ein Flansch 12 des Industrieroboters R vorgegebene Positionen im Raum anfahren kann.

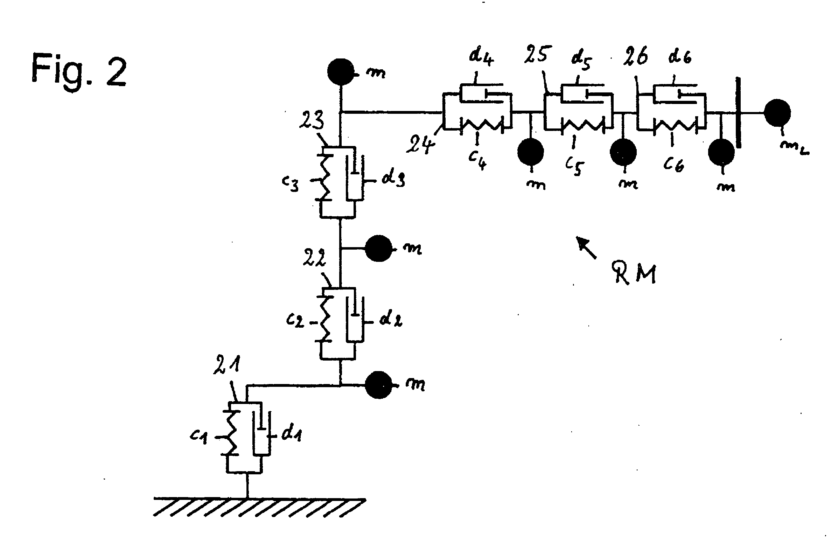

Damit die Steuervorrichtung 11 bzw. das auf der Steuervorrichtung 11 laufende Rechnerprogramm die Position oder die Bewegung des Flansches 12 im Raum steuern oder regeln kann, ist in der Steuervorrichtung 11 u.A. ein dynamisches Modell des Industrieroboters R hinterlegt. Das dynamische Modell des Industrieroboters R ist im Falle des vorliegenden Ausführungsbeispiels ein in der Fig. 2 dargestelltes Feder-Dämpfer Robotermodell RM, das auch als "rigid link, flexible joint (RLFJ)" Robotermodell bezeichnet wird. Für das Robotermodell RM wurde angenommen, dass die Elastizitäten der den einzelnen Achsen 1-6 zugeordneten Gelenke/ Getriebe konzentriert sind und demnach als individuelle Feder-Dämpfer Elemente 21-26 mit Steifigkeiten $c_i$ und Dämpfungen $d_i$ modelliert werden können. D.h. die einzelnen Gelenke/ Getriebe sind als eine Torsionsfeder um die entsprechende Drehachse mit Steifigkeiten $c_i$ und Dämpfungen $d_i$ modelliert und die zur entsprechenden Drehachse orthogonalen Achsen werden als ideal steif angenommen. Die Glieder zwischen den Gelenken, also die Hebel 7-10, sind als starr angenommen, sodass der Industrieroboter R als eine Folge von einzelnen Feder-Dämpfer Elementen 21-26 modelliert werden kann. Die Verbindungen zwischen den Gelenken, also die Hebel 7-10, sind im Falle des vorliegenden Ausführungsbeispiels kinematisch durch ihre geometrischen Ausdehnungen mit Masseneigenschaften (konzentrierte Massen m mit relativ zum vorhergehenden Gelenk beschriebenen Massenschwerpunkt und Trägheitstensor bzgl. des Massenschwerpunkts) ohne Elastizität modelliert. Ein eventuell am Flansch 12 befestigtes Werkzeug wird im Falle des vorliegenden Ausführungsbeispiels ebenfalls als konzentrierte Masse $m_L$ modelliert.

Im Falle des vorliegenden Ausführungsbeispiels weist demnach das Robotermodell RM ein der Achse 1 zugeordnetes erstes Feder-Dämpfer Element 21, dem ersten Feder-Dämpfer Element 21 nachfolgenden und der Achse 2 zugeordnetes zweites Feder-Dämpfer Element 22, dem zweiten Feder-Dämpfer Element 22 nachfolgenden und der Achse 3 zugeordnetes drittes Feder-Dämpfer Element 23, dem dritten Feder-Dämpfer Element 23 nachfolgenden und der Achse 4 zugeordnetes viertes Feder-Dämpfer Element 24, dem vierten Feder-Dämpfer Element 24 nachfolgenden und der Achse 5 zugeordnetes fünftes Feder-Dämpfer Element 25 und dem fünften Feder-Dämpfer Element 25 nachfolgenden und der Achse 6 zugeordnetes sechstes Feder-Dämpfer Element 26 auf.

Das erste Feder-Dämpfer Element 21 weist die Steifigkeit $c_1$ und die Dämpfung $d_1$, das zweite Feder-Dämpfer Element 22 weist die Steifigkeit $c_2$ und die Dämpfung $d_2$, das dritte Feder-Dämpfer Element 23 weist die Steifigkeit $c_3$ und die Dämpfung $d_3$, das vierte Feder-Dämpfer Element 24 weist die Steifigkeit $c_4$ und die Dämpfung $d_4$, das fünfte Feder-Dämpfer Element 25 weist die Steifigkeit $c_5$ und die Dämpfung $d_5$ und das sechste Feder-Dämpfer Element 26 weist die Steifigkeit $c_6$ und die Dämpfung $d_6$ auf.

Die Parameter des Robotermodells RM, also u.A. die Steifigkeiten $c_i$ und Dämpfungen $d_i$ wurden im Falle des vorliegenden Ausführungsbeispiels mittels einer mit der Steuerungsvorrichtung 11 verbundenen Tastatur 13 als Beispiel einer Eingabevorrichtung eingegeben, bzw. in einer Datei gespeichert und daraus ausgelesen.

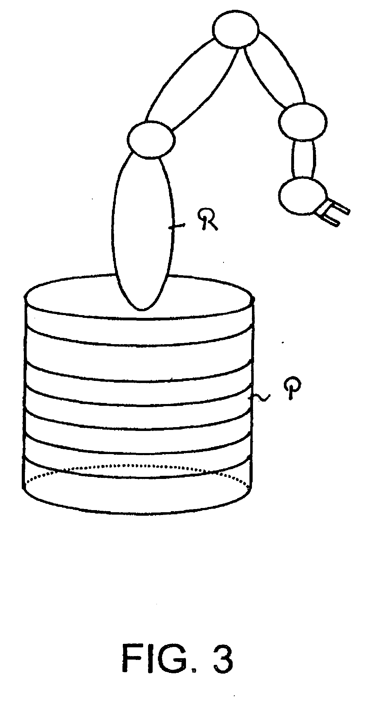

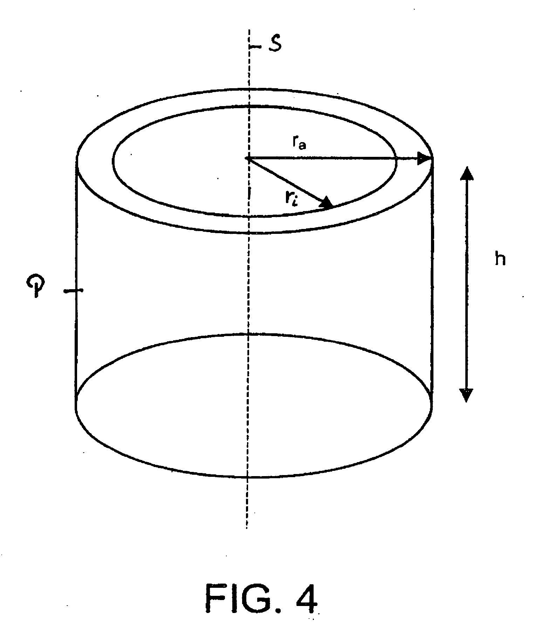

Die Fig. 3 zeigt den Industrieroboter R auf einem in der Fig. 4 näher dargestellten Podest P als ein Beispiels einer Befestigungsvorrichtung für den Industrieroboter R. Im Falle des vorliegenden Ausführungsbeispiels hat das Podest P die Form eines geraden Hohlkreiszylinders mit einem Außenradius $r_a$, einem Innenradius $r_i$ und einer Höhe $h$. Des Weiteren liegt im Falle des vorliegenden Ausführungsbeispiels die Symmetrieachse S des Podests P auf der Achse 1 des Industrieroboters R.

Das Podest P kann ebenfalls als ein Feder-Dämpfer Element mit einer Steifigkeit $c_P$ und einer Dämpfung $d_P$ modelliert werden. Die Dämpfung $d_P$ ergibt sich aus der Dämpfung des für das Podest P verwendeten Materials, z.B. Metall oder Stahl, und aus der dem Material des Podests P zugeordneten Materialkonstante "Schubmodul" G kann die Steifigkeit $c_P$ des Podests P errechnet werden. Diese ergibt sich bei einem hohlzylinderförmigen Podest wie dem Podest P des vorliegenden Ausführungsbeispiels als

$$c_P = \frac{\pi \cdot G \cdot (r_a^{\ 4} - r_i^{\ 4})}{2 \cdot h}$$

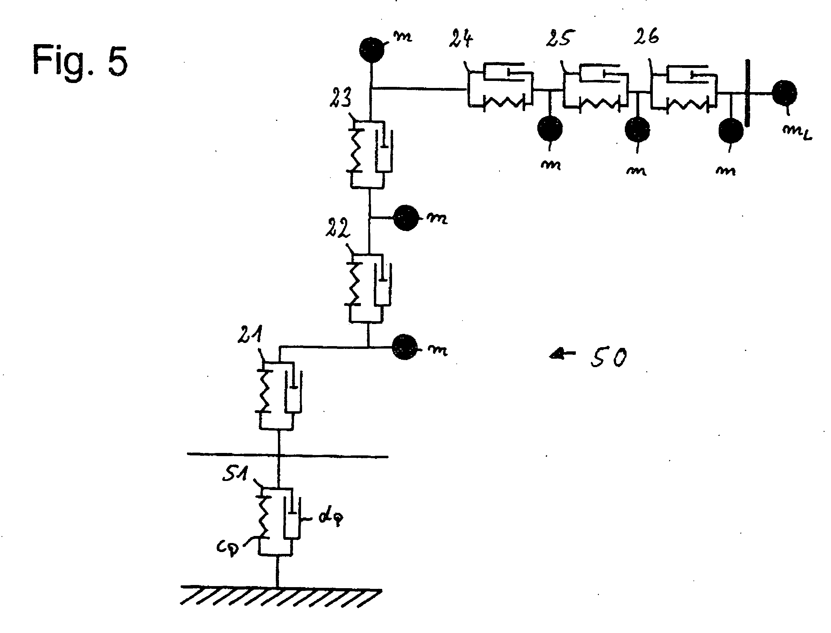

Im Falle des vorliegenden Ausführungsbeispiels können die Steifigkeit $c_P$ und die Dämpfung $d_P$ des Podests P mit der Tastatur 13 in die Steuerungsvorrichtung 11 eingegeben werden, woraufhin das auf der Steuervorrichtung 11 laufende Rechnerprogramm das in der Fig. 2 gezeigte Robotermodell RM um ein das Podest P modellierende Feder-Dämpfer Elemente 51 mit der Steifigkeit $c_P$ und der Dämpfung $d_P$ erweitert, woraus sich ein in der Fig. 5 gezeigtes erweitertes Feder-Dämpfer Modell 50 ergibt, dass das dynamische Verhalten des auf dem Podest P befestigten Industrieroboters R mit Podest P beschreibt. Das erweiterte Feder-Dämpfer Modell 50 ist demnach eine Folge von Feder-Dämpfer Elementen 21-26, 51, wobei das das Podest P modellierende Feder-Dämpfer Element 51 dem das der Achse 1 zugeordnete Gelenk/Getriebe modellierende erste Feder-Dämpfer Element 21 vorangeht.

Die Steuerungsvorrichtung 11 bzw. das auf der Steuerungsvorrichtung 12 laufende und für die Steuerung oder Regelung der Position oder Bewegung des Flansches 12 vorgesehene Rechnerprogramm verwendet dann das erweiterte Feder-Dämpfer Modell 50 für die Ansteuerung der elektrischen Antriebe des Industrieroboters R.

Für ein alternatives Ausführungsbeispiel ist die Steuerungsvorrichtung 11 derart programmiert, dass sie aufgrund der eingegebenen Steifigkeit $c_P$ und Dämpfung $d_P$ des Podests P das Robotermodell RM folgendermaßen modifiziert:

Das das Podest P beschreibende Feder-Dämpfer Element 51 ist in Serie mit dem ersten Feder-Dämpfer Element 21, das dem Gelenk/ Getriebe der Achse 1 des Industrieroboters R zugeordnet ist, geschaltet. Das erste Feder-Dämpfer Element 21 und das das Podest P modellierende Feder-Dämpfer Element 51 können demnach als ein einziges Feder-Dämpfer Element modelliert werden, dessen Steifigkeit $c_{res}$ die Steuervorrichtung 11 folgendermaßen errechnet:

$$c_{res} = \frac{c_1 \cdot c_P}{c_1 + c_P}$$

Unter der Annahme, dass das Podest P und der Industrieroboter R aus demselben Material, z.B. Stahl, gefertigt sind, ergibt sich für die resultierende Dämpfung $d_{res}$:

$$d_{res} = d_1 = d_P$$

Im Falle des vorliegenden Ausführungsbeispiels ist die Steuerungsvorrichtung 11 ferner derart programmiert, dass sie den Parameter Steifigkeit $c_1$ des ersten Feder-Dämpfer Element 21 des Robotermodells RM durch die resultierende Steifigkeit $c_{res}$ ersetzt, woraus ein modifiziertes dynamisches Modell entsteht, das das dynamische Verhalten des Podests P mit auf diesem befestigten Industrieroboter R beschreibt. Das modifizierte Modell ist Grundlage für die Steuerung oder Regelung der Position oder Bewegung des Flansches 12.

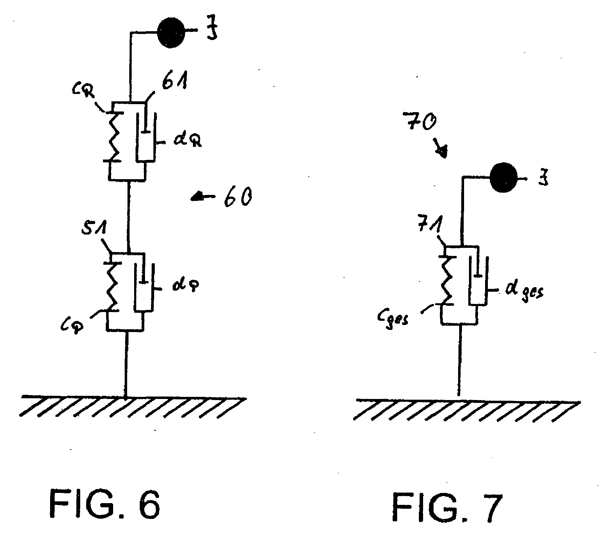

Für ein weiteres Ausführungsbeispiel wird der Industrieroboter R, wie in der Fig. 6 gezeigt, als ein einziges Feder-Dämpfer Element 61 modelliert. Die Steifigkeit $c_R$ und die Dämpfung $d_R$ des Feder-Dämpfer Elements 61 sind der Achse 1 bzw. dem Gelenk/ Getriebe der Achse 1 zugeordnet. Diese den Industrieroboter R beschreibende Roboterparameter werden mit der Tastatur 13 in die Steuerungsvorrichtung 11 eingegeben oder sind bereits in der Steuerungsvorrichtung 11 gespeichert.

Die Trägheit $J$ des Industrieroboters R um die Achse 1 ist entweder bekannt oder kann beim 6-Achs-Knickroboter R abhängig von der Masse des am Flansch befestigten Werkzeugs $m_W$ und der Stellungen der Achsen 2-6 errechnet werden.

Das Podest P wird für dieses Ausführungsbeispiel ebenfalls als das Feder-Dämpfer Element 51 mit der Steifigkeit $c_P$ und der Dämpfung $d_P$ modelliert, sodass ein in der Fig. 6 dargestelltes dynamisches Modell 60 entsteht, das das dynamische Verhalten des Industrieroboters R mit dem Podest P beschreibt. Das dynamische Modell 60 ist im Wesentlichen eine Serienschaltung der beiden Feder-Dämpfer Elemente 51, 61.

Ferner ist die Steuerungsvorrichtung 11 für dieses Ausführungsbeispiel derart eingerichtet, dass sie aus dem dynamischen Modell 60 ein ein einziges Feder-Dämpfer Element 71 aufweisendes dynamisches Modell 70 errechnet, das in der Fig. 7 gezeigt ist. Das Feder-Dämpfer Element 71 weist eine Steifigkeit $c_{ges}$ und eine Dämpfung $d_{ges}$ auf, wobei die Steuervorrichtung 11 die Steifigkeit $c_{ges}$ des Modells 70 gemäß folgender Gleichung berechnet:

$$c_{ges} = \frac{c_R \cdot c_P}{c_R + c_P}$$

Die Dämpfung $d_{ges}$ entspricht im Falle des vorliegenden Ausführungsbeispiels $d_R$ bzw. $d_P$.

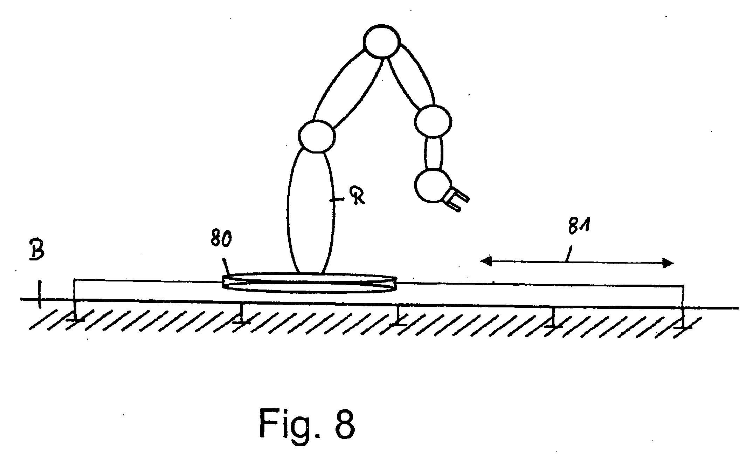

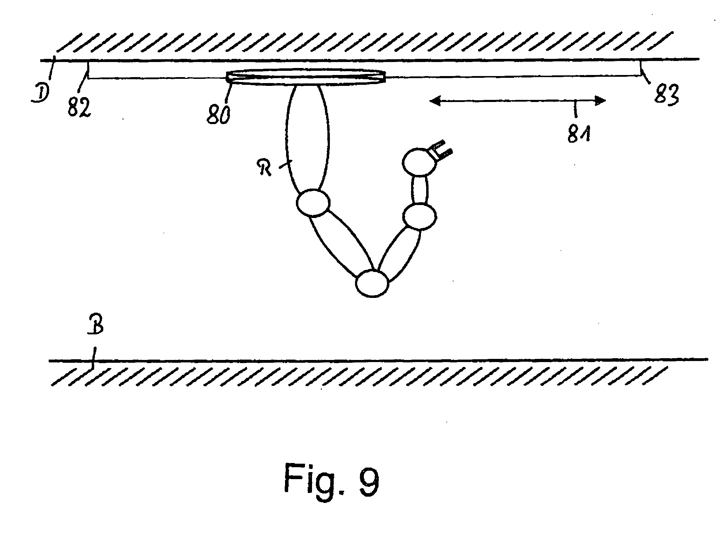

Die Figuren 8 bis 10 illustrieren zwei weitere Ausführungsbeispiele, bei denen der Industrieroboter R nicht auf einem Podest P, sondern an einer Lineareinheit 80 befestigt ist. Die Lineareinheit 80 kann linear in horizontale Richtung mit dem Industrieroboter R bewegt werden, wobei in der Fig. 8 die Lineareinheit 80 als am Boden B und in der Fig. 9 als an der Decke D befestigt dargestellt ist. Im Falle des vorliegenden Ausführungsbeispiels wird die Lineareinheit 80 und der Industrieroboter R von derselben Steuerungsvorrichtung gesteuert und geregelt.

Die Lineareinheit 80 kann als ein Feder-Dämpfer Element in Verfahrrichtung und als ein Feder-Dämpfer Element um die Verfahrrichtung modelliert werden. Die Verfahrrichtung ist mit einem Doppelpfeil 81 angedeutet.

Ist die Lineareinheit 80 am Boden B angeordnet, dann ist diese üblicherweise mit mehreren Dübeln befestigt, sodass deren Torsion um die Verfahrrichtung vernachlässigt werden kann.

Ist die Lineareinheit 80 dagegen an der Decke D befestigt (hängende Konstruktion), dann sollte unter Umständen auch die Torsion um die Verfahrrichtung mit modelliert werden. Die Torsionssteifigkeit $c_L$ des die Lineareinheit in Verfahrrichtung modellierenden Feder-Dämpfer Elements hängt dann zusätzlich von der Position der Lineareinheit 80 relativ zu Befestigungen 82, 83, mit denen die Lineareinheit 80 an der Decke D befestigt ist, ab. Befindet sich die Lineareinheit 80 nahe an einer der beiden Befestigungen 82, 83, dann ist die Torsionssteifigkeit $c_L$ größer als wenn sich die Lineareinheit 80 mittig zwischen den beiden Befestigungen 82, 83 befindet.

Die Dämpfung $d_L$ ist dagegen im Falle des vorliegenden Ausführungsbeispiels konstant.

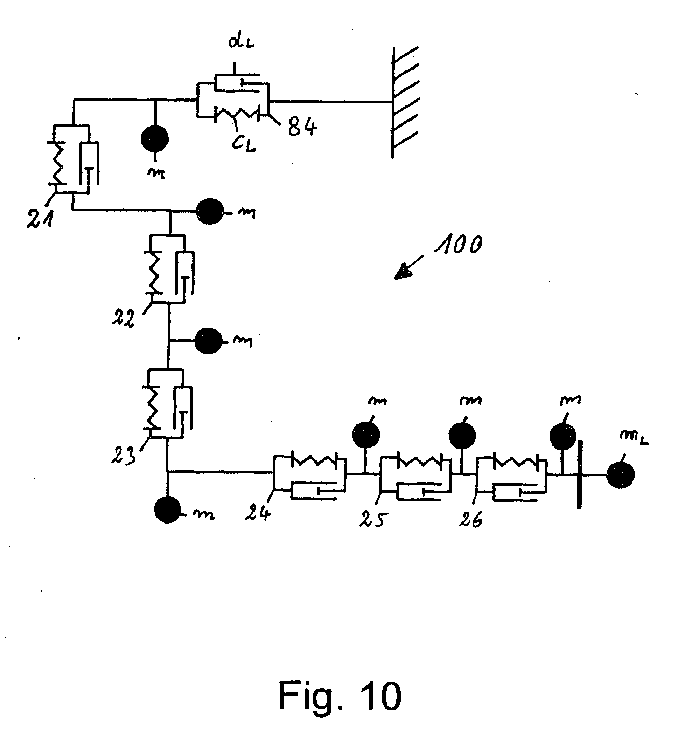

Im Falle des vorliegenden Ausführungsbeispiels können die Steifigkeit $c_L$ und die Dämpfung $d_L$ der Lineareinheit 80 sowie deren funktionale Abhängigkeit von der Position eines nicht näher dargestellten Verfahrwagens auf der Lineareinheit 80 mit der Tastatur 13 in die Steuerungsvorrichtung 11 eingegeben werden, woraufhin das auf der Steuervorrichtung 11 laufende Rechnerprogramm das in der Fig. 2 gezeigte Robotermodell RM um ein die Lineareinheit 80 modellierendes Feder-Dämpfer Elemente 84 mit der positionsabhängigen Steifigkeit $c_L$ und der konstanten Dämpfung $d_L$ erweitert, woraus sich für die an der Decke D befestigte Lineareinheit 80 ein in der Fig. 10 gezeigtes erweitertes Feder-Dämpfer Modell 100 ergibt, das das dynamische Verhalten des an der Lineareinheit 80 befestigten Industrieroboters R beschreibt. Das erweiterte Feder-Dämpfer Modell 100 ist demnach eine Folge von Feder-Dämpfer Elementen 21-26, 84, wobei das die Lineareinheit 80 modellierende Feder-Dämpfer Element 84 dem das der Achse 1 zugeordneten Gelenk/Getriebe modellierenden ersten Feder-Dämpfer Element 21 vorangeht. Die Steuerungsvorrichtung 11 bzw. das auf der Steuerungsvorrichtung 11 laufende und für die Steuerung oder Regelung der Position oder Bewegung des Flansches 12 vorgesehene Rechnerprogramm verwendet dann das erweiterte Feder-Dämpfer Modell 100 für die Ansteuerung der elektrischen Antriebe des Industrieroboters R sowie der Lineareinheit 80. Aufgrund eines in den Figuren nicht näher dargestellten Antriebs zum Verfahren der Lineareinheit 80 kann ferner die Position der Lineareinheit 80 relativ zu den Befestigungen 82, 83 ermittelt werden, wodurch die Steifigkeit $c_L$ der die Lineareinheit 80 modellierenden Feder-Dämpfer-Einheit 84 als Funktion der Position der Lineareinheit 80 beschrieben werden kann.

Bei den vorangegangenen Ausführungsbeispielen wurde die Elastizität der Befestigungsvorrichtung, d.h. des Podests P bzw. der Lineareinheit 80, berücksichtigt.

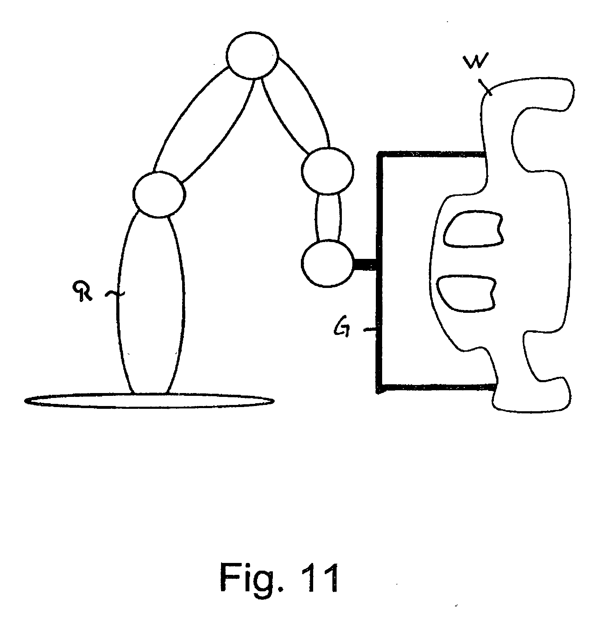

Die Fig. 11 zeigt dagegen den Industrieroboter R mit einem Greifer G mit einer Masse $m_G$ und einem mit dem Greifer G gegriffenen Werkstück W mit einer Masse $m_W$. Sowohl der Greifer G als auch das Werkstück W weisen im Falle des vorliegenden Ausführungsbeispiels eine nicht vernachlässigbare Elastizität auf und können jeweils als ein Feder-Dämpfer Element modelliert werden, wobei der Greifer eine Steifigkeit $c_G$ und eine Dämpfung $d_G$ und das Werkstück W eine Steifigkeit $c_W$ und eine Dämpfung $d_W$ aufweist. In dieser Betrachtung eingeschlossen ist der Fall, dass nur eine der Komponenten G oder W vorhanden ist, oder nur eine dieser Komponenten eine zu berücksichtigende Elastizität aufweist.

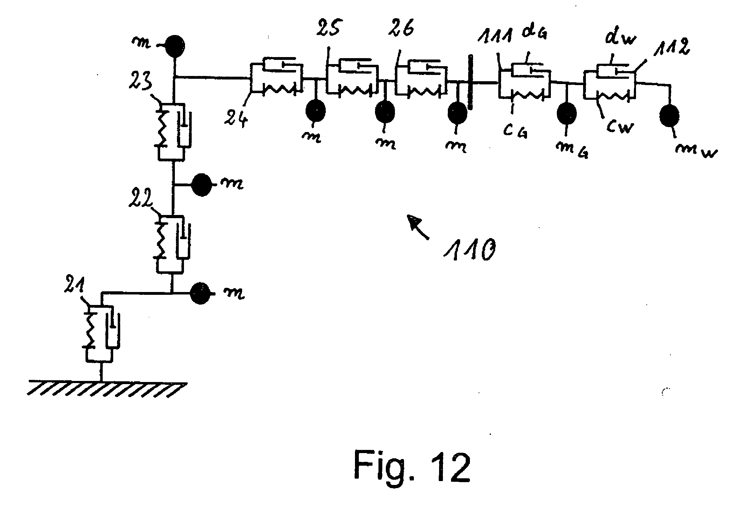

Im Falle des vorliegenden Ausführungsbeispiels können die Steifigkeiten $c_G$, $c_W$ und die Dämpfung $d_G$, $d_W$ des Greifers G und des Werkstücks W mit der Tastatur 13 in die Steuerungsvorrichtung 11 eingegeben werden, woraufhin das auf der Steuervorrichtung 11 laufende Rechnerprogramm das in der Fig. 2 gezeigte Robotermodell RM um ein den Greifer G modellierendes Feder-Dämpfer Elemente 111 mit der Steifigkeit $c_G$ und der Dämpfung $d_G$ und um ein das Werkstück W modellierendes Feder-Dämpfer Elemente 112 mit der Steifigkeit $c_W$ und der Dämpfung $d_W$ erweitert, woraus sich ein in der Fig. 12 gezeigtes erweitertes Feder-Dämpfer Modell 110 ergibt, das das dynamische Verhalten des Industrieroboters R mit Greifer G und gegriffenem Werkstück W beschreibt. Das erweiterte Feder-Dämpfer Modell 110 ist demnach eine Folge von Feder-Dämpfer Elementen 21-26, 111, 112, wobei das den Greifer G modellierende Feder-Dämpfer Element 111 dem das der Achse 6 zugeordnete Gelenk/Getriebe modellierenden sechsten Feder-Dämpfer Element 26 nachfolgt. Das das Werkstück W modellierende Feder-Dämpfer Element 112 folgt dem Feder-Dämpfer Element 111 nach. Außerdem werden im Falle des vorliegenden Ausführungsbeispiels noch die Massen $m_G$ und $m_W$ des Greifers G bzw. des Werkstücks W sowie deren Massenschwerpunkte und Trägheitstensoren mit der Tastatur 13 eingegeben.

Die Steuerungsvorrichtung 11 bzw. das auf der Steuerungsvorrichtung 11 laufende und für die Steuerung oder Regelung der Position oder Bewegung des Greifers G vorgesehene Rechnerprogramm verwendet dann das erweiterte Feder-Dämpfer Modell 110 für die Ansteuerung der elektrischen Antriebe des Industrieroboters R.

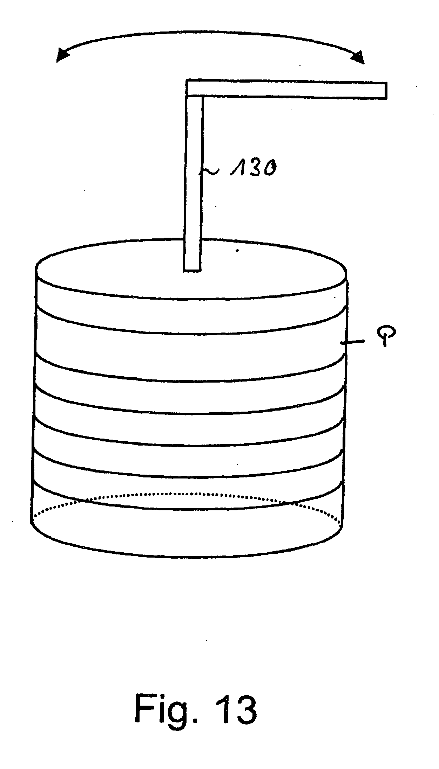

Die Fig. 13 zeigt ein weiteres Ausführungsbeispiel in Form eines 1-Achs Roboters 130, der auf dem in der Fig. 4 gezeigten Podest P befestigt ist. Das dynamische Verhalten des Roboters 120 mit Podest P kann als ein einziges Feder-Dämpfer Element mit einer Steifigkeit $c_{ges}$ und einer Dämpfung $d_{ges}$ modelliert werden, wie es in der Fig. 7 gezeigt ist.

Die Steifigkeit $c_{ges}$ und einer Dämpfung $d_{ges}$ können dann auch folgendermaßen experimentell ermittelt werden:

Der Roboter 130 auf dem Podest P wird durch einen Stoß (Impuls) zu Schwingungen angeregt. Es ergibt sich ein Ausschwingvorgang in Form einer gedämpften harmonischen Schwingung, die im Falle des vorliegenden Ausführungsbeispiels über geeignete Messvorrichtungen beobachtet wird. Als Messvorrichtungen sind beispielsweise Beschleunigungssensoren 131 am Flansch 12 des Roboters 130 oder ein nicht dargestelltes Kamerasystem, das den sogenannten Tool Center Point des Roboters 130 beobachtet, geeignet.

Alternativ kann der Ausschwingvorgang auch mit am nicht näher dargestellten elektrischen Antrieb angeordneten Positionssensoren oder durch eine Analyse des elektrischen Stroms des Antriebs beobachtet werden.

Der Ausschwingvorgang ergibt ein Signal u(t) als Funktion der Zeit t = 0...T zu diskreten Zeitpunkten gemessen. Die physikalische Größe ist entweder die Position, die Beschleunigung oder der elektrische Strom.

Der Ausschwingvorgang eines gedämpften harmonischen Oszillators ergibt für den Achsenwinkel q(t) allgemein den folgenden Verlauf:

$$q(t) = A \cdot e^{-d \cdot t} \cdot \sin(\omega \cdot t + \varphi)$$

wobei $\omega$ die Schwingungsfrequenz, $d$ der Abklingkoeffizient (Dämpfungswert) und $\varphi$ ein Phasenwinkel ist.

Durch Minimierung des Fehlers

$$\min_{A, d, \omega+\varphi} \sum_{t=0}^{T} (u(t) - q(t))^2$$

kann daraus die Kreisfrequenz $\omega$ der Schwingung bzw. über den Zusammenhang

$$\omega^2 = \frac{c_{ges}}{m}$$

die resultierende Steifigkeit $c_{ges}$ des Roboters 130 mit Podest P ermittelt werden.

Bei gemessener Beschleunigung kann $\omega$ über die Optimierung der Abweichung zwischen $u(t)$ und der nach Modell vorliegenden Beschleunigung

$$q''(t) = -A \cdot d^2 \cdot \omega^2 \cdot e^{-d \cdot t} \cdot \sin(\omega \cdot t + \varphi)$$

ermittelt werden.

Bei gemessenem Motorstrom $I(t)$ kann über den kT-Faktor $kT$ in Motormomente $\tau(t)$ und dann über die Massenträgheit $J$ in die Beschleunigung $q''(t)$ umgerechnet werden:

$$q''(t) = \frac{\tau(t)}{J} = \frac{I(t)}{kT \cdot J}$$

In den beschriebenen Ausführungsbeispielen wurde der Industrieroboter R bzw. der 1-Achs Roboter 130 mittels Feder-Dämpfer Modelle modelliert. Die Erfindung ist jedoch nicht auf solche Modelle beschränkt.

Ähnliche Verfahren, wie hier für die erste Achse eines Roboters beschrieben, können auch für elastische Komponenten am Flansch des Roboters verwendet werden.

**Patentansprüche**

1. Robotersteuerungsvorrichtung, aufweisend ein dynamisches Modell (50, 60, 70, 100, 110) für einen mit der Robotersteuerungsvorrichtung (11) zu steuernden Roboter (R, 130), der mit wenigstens einer Komponente (G, W, P, 80) verbunden ist, wobei für das dynamische Modell (50, 60, 70, 100, 110) sowohl dynamische Eigenschaften des Roboters (R, 130) als auch dynamische Eigenschaften der Komponente (G, W, P, 80) berücksichtigt sind, **dadurch gekennzeichnet, dass** das dynamische Modell (50, 60, 70, 100, 110) ein erstes Teilmodell (RM, 60) und ein zweites Teilmodell (51, 84, 111, 112) aufweist, das erste Teilmodell (RM, 60) ein dynamisches Modell des Roboters (RM) und das zweite Teilmodell (51, 84, 111, 112) ein dynamisches Modell der Komponente (80, G, W, P) ist, und das dynamisches Modell ein Feder-Dämpfer Modell (50, 60, 100, 110) aus einer Mehrzahl von modellierten Feder-Dämpfer Elementen (21-26, 51, 61, 84, 111, 112) ist, von denen wenigstens ein Feder-Dämpfer Element (21-26, 61) dem ersten Teilmodell und wenigstens ein weiteres der Feder-Dämpfer Elemente (51, 84, 111, 112) dem zweiten Teilmodell zugeordnet ist.

2. Robotersteuerungsvorrichtung nach Anspruch 1, bei der die Komponente eine Befestigungsvorrichtung (P, 80) für den Roboter (R, 130), eine zur Handhabung von Objekten zweckdienliche Einrichtung (G), ein Greifer (G) mit gegriffenem Werkstück (W) und/oder ein mit dem Roboter (R, 130) gegriffenes Werkstück (W) ist.

3. Verfahren zum Erhalten eines dynamischen Models für die Steuerung eines Roboters (R, 130), aufweisend folgende Verfahrensschritte:

- Eingeben von das dynamische Verhalten eines Roboters. (R, 130) beschreibenden Roboterparametern ($c_{1-C6}$, $d_1$-$d_6$) in eine Robotersteuerungsvorrichtung (11),
- Eingeben von das dynamische Verhalten einer mit dem Roboter (R, 130) verbundenen Komponente (P, G, W, 80) beschreibenden Komponentenparametern ($c_p$, $d_p$, $c_L$, $d_L$, $c_G$, $d_G$, $c_w$, $d_w$) in die Robotersteuerungsvorrichtung (11) und
- Erstellen eines dynamischen Modells (50, 60, 70, 100, 110), das das dynamische Verhalten des Roboters (R, 130) mit der mit dem Roboter (R, 130) befestigten Komponente (P, G, W, 80) modelliert, durch Erstellen eines das dynamische Verhalten des Roboters (R) beschreibenden ersten Teilmodells (RM) aufgrund der eingegebenen Roboterparameter ($c_1$-$c_6$, $d_1$-$d_6$, $c_R$, $d_R$) und Erstellen eines das dynamische Verhalten der Komponente (G, W, P, 80) beschreibenden zweiten Teilmodells (51, 84, 11, 112) aufgrund der eingegebenen Komponentenparameter ($c_p$, $d_p$, $c_L$, $d_L$, $c_G$, $d_G$, $c_w$, $d_w$), wobei das dynamische Modell ein Feder-Dämpfer Modell (50, 60, 100, 110) aus einer Mehrzahl von modellierten Feder-Dämpfer Elementen (21-26, 51, 61, 84, 111, 112) ist, von denen wenigstens ein Feder-Dämpfer Element (21-26, 61) dem ersten Teilmodell (61, RM) und wenigstens ein weiteres der Feder-Dämpfer Elemente (51, 84, 111, 112) dem zweiten Teilmodell (51, 84, 111, 112) zugeordnet ist.

4. Verfahren zum Erhalten eines dynamischen Models für die Steuerung eines Roboters, aufweisend folgende Verfahrensschritte:

- Eingeben von das dynamische Verhalten einer mit einem Roboter (R, 130) verbundenen Komponente (G, W, P, 80) beschreibende Komponentenparameter ($c_p$, $d_p$, $c_L$, $d_L$, $c_G$, $d_G$, $c_w$, $d_w$) in eine Robotersteuerungsvorrichtung (11) und
- Erstellen eines das dynamische Verhalten des Roboters (R, 130) mit der mit dem Roboter (R, 130) befestigten Komponente (P, G, W, 80) beschreibenden dynamischen Modells (50, 60, 70, 100, 110) auf Grundlage eines das dynamische Verhalten des Roboters (R, 130) beschreibenden und in der Robotersteuerungsvorrichtung (11) gespeicherten Robotermodells (RM, 61) und aufgrund der Komponentenparameter ($c_p$, $d_p$, $c_L$, $d_L$, $c_G$, $d_G$, $c_w$, $d_w$), wobei das Robotermodell ein erstes Teilmodell (61, RM) ist, ein das dynamische Verhalten der Komponente beschreibendes zweites Teilmodell (51, 84, 111, 112) erstellt wird und das dynamische Modell (50, 60, 100, 110) durch Zusammensetzten des ersten und zweiten Teilmodells (51, 84, 111, 112) erstellt wird, wobei das dynamische Modell ein Feder-Dämpfer Modell (50, 60, 100, 110) aus einer Mehrzahl von modellierten Feder-Dämpfer Elementen (21-26, 51, 61, 84, 111, 112) ist, von denen wenigstens ein Feder-Dämpfer Element (21-26, 61) dem ersten Teilmodell (61, RM) und wenigstens ein weiteres der Feder-Dämpfer Elemente (51, 84, 111, 112) dem zweiten Teilmodell (51, 84, 111, 112) zugeordnet ist.

5. Verfahren nach Anspruch 3 oder 4, bei dem

- die Roboterparameter Steifigkeit ($C_1$-$C_6$, $C_R$) und Dämpfung ($d_1$-$d_6$, $d_R$) von Gelenken und/oder Getrieben des Roboters (RM, 130) und die Komponentenparameter die Dämpfung ($c_P$, $c_L$, $c_G$, $c_W$) und Steifigkeit ($d_P$, $d_L$, $d_G$, $d_w$) der Komponente (G, W, P, 80) sind,
- die Roboterparameter Schwingungsfrequenzen und Trägheiten von Gelenken und/oder Getrieben des Roboters und die Komponentenparameter die Schwingungsfrequenz und Trägheit der Komponente sind, oder
- die Roboterparameter und die Komponentenparameter mittels finiter Elemente Methoden-Berechnung ermittelt wurden.

6. Verfahren nach einem der Ansprüche 3 bis 5, bei der die Komponente eine Befestigungsvorrichtung (P, 80) für den Roboter (R, 130), eine zur Handhabung von Objektes zweckdienliche Einrichtung (G), ein Greifer (G) mit gegriffenem Werkstück (W) und/oder ein mit dem Roboter (R, 130) gegriffenes Werkstück (W) ist.

**Claims**

1. Robot control device, comprising a dynamic model (50, 60, 70, 100, 110) for a robot (R, 130) to be controlled by the robot control device (11), the robot being connected to at least one component (G, W, P, 80), wherein for the dynamic model (50, 60, 70, 100, 110) both the dynamic characteristics of the robot (R, 130) and the dynamic characteristics of the component (G, W, P, 80) are taken into consideration, **characterised in that** the dynamic model (50, 60, 70, 100, 110) comprises a first part model (RM, 60) and a second part model (51, 84, 111, 112), the first part model (RM, 60) is a dynamic model of the robot (RM) and the second part model (51, 84, 111, 112) is a dynamic model of the component (80, G, W, P), and the dynamic model is a spring-damper model (50, 60, 100, 110) consisting of a plurality of modelled spring-damper elements (21-26, 51, 61, 84, 111, 112), of which at least one spring-damper element (21-16, 61) is assigned to the first part model and at least one additional spring-damper element (51, 84, 111, 112) is assigned to the second part model.

2. Robot control device according to claim 1 in which the component is a securing device (P, 80) for the robot (R, 130), a device (G) used for handling objects, a gripper (G) with a gripped workpiece (W) and/or a workpiece (W) gripped by the robot (R, 130).

3. Method for obtaining a dynamic model for the control of a robot (R, 130) comprising the following method steps:

   - entering robot parameters ($c_1$-$c_6$, $d_1$-$d_6$) describing the dynamic behaviour of a robot (R, 130) into a robot control device (11),
   - entering component parameters ($c_F$, $d_F$, $C_L$, $d_L$, $c_G$, $d_G$, $C_W$, $d_W$) describing the dynamic behaviour of a component (P, G, W, 80) connected to the robot (R, 130) into the robot control device (11) and
   - preparing a dynamic model (50, 60, 70, 100, 110), which models the dynamic behaviour of the robot (R, 130) with the component (P, G, W, 80) secured to the robot (R, 130), by preparing a first part model (RM) describing the dynamic behaviour of the robot (R) on the basis of the entered robot parameters ($c$-$c_6$, $d_1$-$d_6$, $c_R$, $d_R$) and preparing a second part model (51, 84, 11, 112) describing the dynamic behaviour of the component (G, W, P, 80) on the basis of the entered component parameters ($c_F$, $d_F$, $_{CL}$, $d_L$, $c_G$, $d_G$, $c_W$, $d_W$), wherein the dynamic model is a spring-damper model (50, 60, 100, 110) from a plurality of modelled spring-damper elements (21-26, 51, 61, 84, 111, 112), of which at least one spring-damper element (21-26, 61) is assigned to the first part model (61, RM) and at least one additional spring-damper element (51, 84, 111, 112) is assigned to the second part model (51, 84, 111, 112).

4. Method for obtaining a dynamic model for the control of a robot comprising the following method steps:

   - entering component parameters ($c_F$, $d_F$, $C_L$, $d_L$, $c_G$, $d_G$, $C_W$, $d_W$) describing the dynamic behaviour of a component (G, W, P, 80) connected to a robot (R, 130) into a robot control device (11) and
   - preparing a dynamic model (50, 60, 70, 100, 110) describing the dynamic behaviour of the robot (R, 130) with the component (P, G, W, 80) connected to the robot (R, 130) on the basis of a robot model (RM, 61) describing the dynamic behaviour of the robot (R, 130) and saved in the robot control device (11) and on the basis of the component parameters ($c_F$, $d_F$, $_{CL}$, $d_L$, $c_G$, $d_G$, $c_W$, $d_W$), wherein the robot model is a first part model (61, RM), a second part model (51, 84, 111, 112) describing the dynamic behaviour of the component is prepared and the dynamic model (50, 60, 100, 110) is prepared by putting together the first and the second part model (51, 84, 111, 112), wherein the dynamic model is a spring-damper model (50, 60, 100, 110) consisting of a plurality of modelled spring-damper elements (21-26, 51, 61, 84, 111, 112), of which at least one spring-damper element (21-26, 61) is assigned to the first part model (61, RM) and at least one further spring-damper element (51, 84, 111, 112) is assigned to the second part model (51, 84, 111, 112).

5. Method according to claim 3 or 4, in which

   - the robot parameters are the rigidity ($c_1$-$c_6$, $c_R$) and damping ($d_1$-$d_6$, $d_R$) of joints and/or gears of the robot (RM, 130) and the component parameters are the damping ($c_F$, $c_L$, $c_G$, $c_W$) and rigidity ($d_F$, $d_L$, $d_G$, $d_W$) of the component (G, W, P, 80),
   - the robot parameters are the vibrational frequencies and inertias of joints and/or gears of the robot and the component parameters are the vibrational frequency and inertia of the component, or
   - the robot parameters and the component parameters were determined by means of a finite element method calculation.

6. Method according to any one of claims 3 to 5 in which the component is a securing device (P, 80) for the robot (R, 130), a device (G) used for handling objects, a gripper (G) with a gripped workpiece (W) and/or a workpiece (W) gripped by the robot (R, 130).

**Revendications**

1. Dispositif de commande de robot, présentant un modèle dynamique (50, 60, 70, 100, 110) pour un robot (R, 130) à commander au moyen du dispositif de commande de robot (11), lequel est relié à au moins un composant (G, W, P, 80), tant des propriétés dynamiques du robot (R, 130) que des propriétés dynamiques du composant (G, W, P, 80) étant prises en considération pour le modèle dynamique (50, 60, 70, 100, 110), **caractérisé en ce que** le modèle dynamique (50, 60, 70, 100, 110) présente un premier modèle partiel (RM, 60) et un deuxième modèle partiel (51, 84, 111, 112) **en ce que** le premier modèle partiel (RM, 60) est un modèle dynamique du robot (RM) et le deuxième modèle partiel (51, 84, 111, 112) est un modèle dynamique du composant (80, G, W, P), et **en ce que** le modèle dynamique est un modèle à amortisseur à ressort (50, 60, 70, 100, 110) constitué par une multitude d'éléments d'amortisseurs à ressort modelés (21-26. 51, 61, 111, 112) dont au moins un élément d'amortisseur à ressort (21-26), 61 est associé au premier modèle partiel et au moins un autre élément d'amortisseur à ressort (51, 84, 111, 112) est associé au deuxième modèle partiel.

2. Dispositif de commande de robot selon la revendication 1, dans lequel le composant est un dispositif de fixation (P, 80) pour le robot (R, 130), un mécanisme (G) utile pour le maniement d'objets, un préhenseur (G) avec pièce à usiner (W) saisie et/ou une pièce usinée (W) saisie avec le robot (R, 130).

3. Procédé pour obtenir un modèle dynamique pour la commande d'un robot (R, 130), présentant les étapes de procédé suivantes :

   - introduction dans un dispositif de commande de robot (11) de paramètres de robot ($c_1$-$c_6$, $d_1$-$d_6$) décrivant le comportement dynamique d'un robot (R, 130),
   - introduction dans le dispositif de commande de robot (11) de paramètres de composant ($c_P$, $d_P$, $c_L$, $d_L$, $c_G$, $d_G$, $c_W$, $d_W$) décrivant le comportement dynamique d'un composant (G, W, P, 80) relié au robot (R, 130) et
   - établissement d'un modèle dynamique (50, 60, 70, 100, 110) qui modélise le comportement dynamique du robot (R, 130) avec le composant (P, G, W, 80) fixé au robot (R, 130) en établissant un premier modèle partiel (RM) décrivant le comportement dynamique du robot (R) sur la base des paramètres de robot ($c_1$-$c_6$, $d_1$-$d_6$, $c_R$, $d_R$) introduits et établissement d'un deuxième modèle partiel (51, 84, 11, 112) décrivant le comportement dynamique du composant (G, W, P, 80) sur la base des paramètres de composant ($c_P$, $d_P$, $c_L$, $d_L$, $c_G$, $d_G$, $c_W$, $d_W$) introduits, le modèle dynamique étant un modèle à amortisseur à ressort (50, 60, 100, 110) constitué par une multitude d'éléments d'amortisseurs à ressort modelés (21-26, 51, 61, 84, 111, 112) dont au moins un élément d'amortisseur à ressort (21-26), 61 est associé au premier modèle partiel (61, RM) et au moins un autre élément d'amortisseur à ressort (51, 84, 111, 112) est associé au deuxième modèle partiel (51, 84, 111, 112).

4. Procédé pour obtenir un modèle dynamique pour la commande d'un robot, présentant les étapes de procédé suivantes :

   - introduction dans un dispositif de commande de robot (11) de paramètres de composant ($c_P$, $d_P$, $c_L$, $d_L$, $c_G$, $d_G$, $c_W$, $d_W$) décrivant le comportement dynamique d'un composant (G, W, P, 80) relié à un robot (R, 130) et
   - établissement d'un modèle dynamique (50, 60, 70, 100, 110) décrivant le comportement dynamique du composant (G, W, P, 80) fixé au robot sur la base d'un modèle de robot (RM, 61) décrivant le comportement dynamique du robot (R, 130) et mémorisé dans le dispositif de commande de robot (11) et sur la base des paramètres de composant ($c_P$, $d_P$, $C_L$, $d_L$, $c_G$, $d_G$, $c_W$, $d_W$), le modèle de robot étant un premier modèle partiel (671, RM), un deuxième modèle partiel (51, 84, 111, 112) décrivant le comportement dynamique du composant étant établi, et le modèle dynamique (50, 60, 100, 110) étant établi par assemblage des premier et deuxième modèles partiels (51, 84, 111, 112), le modèle dynamique étant un modèle à amortisseur à ressort (50, 60, 70, 100, 110) constitué par une multitude d'éléments d'amortisseurs à ressort modelés (21-26, 51, 61, 111, 112) dont au moins un élément d'amortisseur à ressort (21-26), 61 est associé au premier modèle partiel et au moins un autre élément d'amortisseur à ressort (51, 84, 111, 112) est associé au deuxième modèle partiel.

5. Procédé selon la revendication 3 ou 4, dans lequel

   - les paramètres de robot sont la rigidité ($c_1$-$c_6$, $c_R$) et l'amortissement ($d_1$-$d_6$, $d_R$) d'articulations et/ou d'engrenages du robot (RM, 130) et les paramètres de composant sont l'amortissement ($c_P$, $c_L$, $c_G$, $c_W$) et la rigidité ($d_P$, $d_L$, $d_G$, $d_W$) des composants (G, W, P, 80),
   - les paramètres de robot sont des fréquences d'oscillations et des inerties d'articulations et/ou d'engrenages du robot, et les paramètres de composant sont la fréquence d'oscillation et l'inertie du composant, ou
- les paramètres de robot et les paramètres de composant ont été déterminés au moyen de calcul de la méthode des éléments finis.

6. Procédé selon l'une des revendications 3 à 5, dans lequel le composant est un dispositif de fixation (P, 80) pour le robot (R, 130), un mécanisme (G) utile pour le maniement d'objets, un préhenseur (G) avec pièce à usiner (W) saisie et/ou une pièce usinée (W) saisie avec le robot (R, 130).

FIG. 1

Fig. 2

FIG. 3

FIG. 4

# Fig. 5

EP 1 920 892 B1

FIG. 6

FIG. 7

Fig. 8

Fig. 9

EP 1 920 892 B1

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1612004 A2
- US 5497061 A
- WO 0060427 A
- US 4999553 A

**In der Beschreibung aufgeführte Nicht-Patentliteratur**

- Dynamic modelling, simulation and control of a manipulator with flxible links and joints. **B. SUBUDHI.** Robotics and Autonomous Systems. Elsevier Science Publisher, 2002, vol. 41, 257-270